# EUROPEAN PATENT SPECIFICATION

(11) **EP 3 346 537 B1**
(45) Date of publication and mention of the grant of the patent: **02.06.2021**
(21) Application number: 17806132.1
(22) Date of filing: 16.03.2017
(51) Int. Cl.: H01M 8/026, H01M 8/0258, H01M 8/18

(54) **BIPOLAR PLATE, CELL FRAME AND CELL STACK, AND REDOX FLOW BATTERY**
BIPOLARPLATTE, ZELLENRAHMEN SOWIE ZELLENSTAPEL UND REDOX-DURCHFLUSSBATTERIE
PLAQUE BIPOLAIRE, CADRE DE CELLULE ET EMPILEMENT DE CELLULES, ET BATTERIE À FLUX RÉDOX

(30) Priority: 30.05.2016 JP 2016107756
(43) Date of publication of application: 11.07.2018
(73) Proprietor: Sumitomo Electric Industries, Ltd., Osaka-shi, Osaka 541-0041 (JP)
(72) Inventor: FUJITA, Hayato, Osaka-shi Osaka 554-0024 (JP); KUWABARA, Masahiro, Osaka-shi Osaka 554-0024 (JP); KANNO, Takashi, Osaka-shi Osaka 554-0024 (JP); TOYODA, Haruhisa, Osaka-shi Osaka 554-0024 (JP); YAMAGUCHI, Hideyuki, Osaka-shi Osaka 554-0024 (JP); SHIRAKI, Kousuke, Osaka-shi Osaka 554-0024 (JP); HAYASHI, Kiyoaki, Osaka-shi Osaka 554-0024 (JP); ITO, Takefumi, Osaka-shi Osaka 554-0024 (JP)
(74) Representative: Hoffmann Eitle
(86) International application number: PCT/JP2017/010813
(87) International publication number: WO 2017/208570

(56) References cited:
- WO-A1-2015/111313
- JP-A- H0 896 820
- JP-A- H0 896 820
- JP-A- H09 283 157
- JP-A- H11 297 338
- JP-A- 2003 142 128
- JP-A- 2007 149 467
- JP-A- 2009 181 805
- JP-A- 2014 530 476
- JP-A- 2015 122 231
- JP-A- 2015 122 231
- JP-A- 2015 505 147
- JP-U- S 638 568

## Description

### Technical Field

The present invention relates to a bipolar plate, a cell frame, a cell stack, and a redox flow battery.

### Background Art

One of known large-capacity storage batteries is a redox flow battery (hereinafter, may be referred to as an "RF battery") in which a battery reaction is conducted by supplying electrolytes to electrodes. Examples of use of the RF battery include, besides use for load leveling, use for a voltage sag compensation and an emergency power supply, and use for smoothing the output of natural energy, such as solar power generation and wind power generation.

Such an RF battery typically includes, as a main component, a battery cell including a positive electrode to which a positive electrode electrolyte is supplied, a negative electrode to which a negative electrode electrolyte is supplied, and a membrane disposed between the positive electrode and the negative electrode. A large-capacity RF battery uses a so-called cell stack formed by stacking a plurality of battery cells and fastening the battery cells to a certain extent. A bipolar plate is usually disposed between adjacent battery cells. Specifically, the cell stack is formed by stacking a bipolar plate, a positive electrode, a membrane, a negative electrode, another bipolar plate in that order repeatedly.

The RF battery is typically used by constructing an RF battery system including a circulation mechanism that circulates and supplies electrolytes to the RF battery. The circulation mechanism includes tanks that respectively stores a positive electrode electrolyte and a negative electrode electrolyte, pipes that connect each of the tanks to the RF battery, and pumps provided on the pipes. In JP 2015 122230 A and JP 2015 210849 A, a bipolar plate having a plurality of groove sections through which an electrolyte flows is used in order to adjust a flow of the electrolyte in each cell, the electrolyte being allowed to flow through an electrode by a pump. Since the bipolar plate has the groove sections on a surface on the electrode side, the flow of the electrolyte flowing through the electrode is adjusted, thereby decreasing a pressure loss of the electrolyte. In addition, since the bipolar plate has the groove sections on a surface on the electrode side, the electrolyte flows so as to traverse between the adjacent groove sections over a section (hereinafter referred to as a "ridge section") located between the groove sections, and the electrolyte conducts a battery reaction on the electrode facing the ridge section to decrease the amount of electrolyte discharged in an unreacted state.

WO 2015/111313 A1 discloses a redox flow battery having lowered internal resistance. The redox flow battery is provided with a diaphragm, a bipolar plate, an electrode disposed between the diaphragm and the bipolar plate, an inlet port for supplying an electrolytic solution to the electrode, and an outlet port for evacuating the electrolytic solution from the electrode, and carries out charging-discharging reactions by flowing the electrolytic solution to the electrode. The electrode is provided with an anisotropic electrode layer having different permeabilities between a direction in the plane of this electrode and a direction that is orthogonal to the direction in the plane of the electrode. In the anisotropic electrode layer, permeability in the direction is greater than permeability in the direction. The electrode is disposed in such a way that the direction is substantially parallel to the main flow direction of the electrolytic solution inside the electrode, which is determined based on the shape of the face of the bipolar plate toward the electrode, and the positional relationship between the inlet port and the outlet port.

JP 2015-122231 A discloses a redox flow cell including a barrier membrane, a bipolar plate, and an electrode arranged between the barrier membrane and the bipolar plate circulates electrolyte through the electrode to perform charge/discharge. The bipolar plate includes a flow channel through which the electrolyte flows on an electrode side surface. The electrode includes an electrode layer of which permeability is 7.0×10-14 m2 or more and 9.1×10-10 m2 or less. The flow channel preferably comprises an introduction path through which the electrolyte is introduced into the electrode, and an exhaust path through which the electrolyte is exhausted from the electrode, and the introduction path and the exhaust path are independent without communicating with each other.

JP H08 96820 A discloses recesses and projections of 5-500 µm, preferably 10-200 µm which are formed on the end surface, coming in contact with a gas diffusion electrode, of a rib of a current collecting electrode, on the side surface of the rib, and on the surface of the rib. When compression load is applied to the stacking direction of a fuel cell, the recesses and projections form low surface pressure parts in a contact part, which comes in contact with the end surface of the rib of the current collecting electrode, of the gas diffusion electrode. Oxidizing gas or fuel gas in a gas flow path diffuses inside the contact part of the gas diffusion electrode through the low surface pressure part from the edge of the end surface of the rib. As a result, the area of the gas diffusion electrode contributing to electrochemical reaction is enlarged,
and a fuel cell with high efficiency can be obtained.

### Summary of Invention

A bipolar plate according to the present invention is alternatively defined by claim 1, 2, or 3. The first type of bipolar plate according to the present invention is
a bipolar plate for a battery, the bipolar plate having a surface on which a positive electrode is to be disposed and another surface on which a negative electrode is to be disposed,
in which at least one of the surfaces of the bipolar plate is provided with a plurality of groove sections through which an electrolyte flows and a ridge section located between the groove sections that are adjacent to each other,
the groove sections include an introduction groove section and a discharge groove section that are not in communication with each other,
the ridge section includes an uneven portion configured to suppress sliding of the positive electrode or the negative electrode in a direction in which the adjacent groove sections are arranged in parallel,
the uneven portion includes a rough surface provided on at least a part of a surface of the ridge section, and
the rough surface has a surface roughness of 0.1 pm or more and 10 pm or less in terms of arithmetical mean roughness Ra.

The second type of bipolar plate according to the present invention is
a bipolar plate for a battery, the bipolar plate having a surface on which a positive electrode is to be disposed and another surface on which a negative electrode is to be disposed,
in which at least one of the surfaces of the bipolar plate is provided with a plurality of groove sections through which an electrolyte flows and a ridge section located between the groove sections that are adjacent to each other,
the groove sections include an introduction groove section and a discharge groove section that are not in communication with each other,
the ridge section includes an uneven portion configured to suppress sliding of the positive electrode or the negative electrode in a direction in which the adjacent groove sections are arranged in parallel,
the uneven portion includes a step provided so as to have a difference in height in the direction in which the adjacent groove sections are arranged in parallel, and
the step has a maximum difference in height of 0.1 mm or more and 0.5 mm or less.

The third type of bipolar plate according to the present invention is
a bipolar plate for a battery, the bipolar plate having a surface on which a positive electrode is to be disposed and another surface on which a negative electrode is to be disposed,
in which at least one of the surfaces of the bipolar plate is provided with a plurality of groove sections through which an electrolyte flows and a ridge section located between the groove sections that are adjacent to each other,
the groove sections include an introduction groove section and a discharge groove section that are not in communication with each other,
the ridge section includes an uneven portion configured to suppress sliding of the positive electrode or the negative electrode in a direction in which the adjacent groove sections are arranged in parallel,
the uneven portion includes an inclined surface that inclines from one groove section side toward the other groove section side of the adjacent groove sections, and
the inclined surface has a difference in height of 0.1 mm or more and 0.5 mm or less. Dependent claims relate to preferred embodiments.

A cell frame according to the present invention includes a bipolar plate according to any one of the bipolar plates according to the present invention and a frame body disposed on an outer periphery of the bipolar plate.

A cell stack according to the present invention is obtained by stacking the cell frame according to the present invention, a positive electrode, a membrane, and a negative electrode a plurality of times.

A redox flow battery according to the present invention includes the cell stack according to the present invention.

### Brief Description of Drawings

[Fig. 1] Figure 1 is a schematic plan view illustrating an opposed comb-tooth shaped flow path provided on a bipolar plate according to Embodiment 1.
[Fig. 2] Figure 2 is a schematic enlarged sectional view illustrating the shapes of groove sections and ridge sections provided on a bipolar plate according to Embodiment 1.
[Fig. 3] Figure 3 is a schematic enlarged sectional view illustrating the shapes of groove sections and ridge sections provided on a bipolar plate according to Embodiment 2.
[Fig. 4] Figure 4 is a schematic enlarged sectional view illustrating the shapes of groove sections and ridge sections provided on a bipolar plate according to Embodiment 3.
[Fig. 5] Figure 5 is a schematic explanatory view of a redox flow battery.
[Fig. 6] Figure 6 is a schematic view illustrating a configuration of a cell stack included in a redox flow battery.
[Fig. 7] Figure 7 is a graph showing simulation results of the relationship between a step and a cell resistance in a bipolar plate of Test Example 1.

### Description of Embodiments

### [Technical Problem]

In each of the bipolar plates disclosed in PTL 1 and PTL 2, most of the outermost surface of the bipolar plate is formed by ridge sections located between respective adjacent groove sections. Since the surfaces of the ridge sections are each constituted by a flat surface, there is no friction between an electrode and the bipolar plate. Thus, during the assembly of a battery cell, positional misalignment may occur between the electrode and the bipolar plate.

In view of the above, an object of the present disclosure is to provide a bipolar plate capable of easily preventing positional misalignment of an electrode during the assembly of a battery cell. Another object of the present disclosure is to provide a bipolar plate having good diffusibility of an electrolyte. Still another object of the present disclosure is to provide a cell frame including the bipolar plate, a cell stack including the cell frame, and a redox flow battery including the cell stack.

### [Advantageous Effects of the Present Disclosure]

The bipolar plate can easily prevent positional misalignment of an electrode during the assembly of a battery cell. In addition, the bipolar plate has good diffusibility of an electrolyte. The cell frame, the cell stack, and the redox flow battery can prevent positional misalignment of an electrode during the assembly of a battery cell and have good diffusibility of an electrolyte.

### [Description of Embodiments of the Present Invention]

First, the contents of embodiments of the present invention will be listed and described.

(1) A bipolar plate according to an embodiment of the present invention is
a bipolar plate for a battery, the bipolar plate having a surface on which a positive electrode is to be disposed and another surface on which a negative electrode is to be disposed,
in which at least one of the surfaces of the bipolar plate is provided with a plurality of groove sections through which an electrolyte flows and a ridge section located between the groove sections that are adjacent to each other,
the groove sections include an introduction groove section and a discharge groove section that are not in communication with each other,
the ridge section includes an uneven portion configured to suppress sliding of the positive electrode or the negative electrode in a direction in which the adjacent groove sections are arranged in parallel,
the uneven portion includes a rough surface provided on at least a part of a surface of the ridge section, and
the rough surface has a surface roughness of 0.1 µm or more and 10 µm or less in terms of arithmetical mean roughness Ra.

Since the bipolar plate includes the uneven portion on the ridge section that comes in contact with a positive electrode or a negative electrode, friction is generated between the electrode and the bipolar plate by the uneven portion, and sliding of the electrode can be suppressed by the friction. Accordingly, the electrode can be held on the bipolar plate by simply disposing the electrode on a surface of the bipolar plate. Thus, even during assembly of a battery cell, it is possible to easily prevent positional misalignment from occurring between the electrode and the bipolar plate.

In addition, since the bipolar plate includes the uneven portion on the ridge section that comes in contact with a positive electrode or a negative electrode, the uneven portion changes the flow velocity of an electrolyte and easily generates a turbulent flow when the electrolyte flows so as to traverse between the adjacent groove sections. When a turbulent flow is generated in the ridge section, the electrolyte is forcibly diffused into the electrode disposed so as to face the ridge section, active material ions contained in the electrolyte can be uniformly supplied into the electrode, and thus battery reactivity can be presumably improved.

Since the uneven portion includes the rough surface, friction is easily generated between the electrode and the bipolar plate, and positional misalignment of the electrode with respect to the bipolar plate is easily prevented. Since the rough surface has a surface roughness of 0.1 µm or more in terms of arithmetical mean roughness Ra, positional misalignment of the electrode with respect to the bipolar plate can be prevented. On the other hand, since the rough surface has a surface roughness of 10 µm or less in terms of arithmetical mean roughness Ra, it is easy to arrange the electrode without a gap with respect to the bipolar plate. This is because if a gap is formed between the bipolar plate and the electrode, the electrolyte that flows so as to traverse between the adjacent groove sections over the ridge section is difficult to diffuse into the electrode, and the electrolyte may remain in an unreacted state.

(2) A bipolar plate according to an embodiment of the present invention is
a bipolar plate for a battery, the bipolar plate having a surface on which a positive electrode is to be disposed and another surface on which a negative electrode is to be disposed,
in which at least one of the surfaces of the bipolar plate is provided with a plurality of groove sections through which an electrolyte flows and a ridge section located between the groove sections that are adjacent to each other,
the groove sections include an introduction groove section and a discharge groove section that are not in communication with each other,
the ridge section includes an uneven portion configured to suppress sliding of the positive electrode or the negative electrode in a direction in which the adjacent groove sections are arranged in parallel,
the uneven portion includes a step provided so as to have a difference in height in the direction in which the adjacent groove sections are arranged in parallel, and
the step has a maximum difference in height of 0.1 mm or more and 0.5 mm or less.

Since the uneven portion includes the step, a ridge line portion extending from a high portion to a low portion can catch the electrode, and thus positional misalignment of the electrode with respect to the bipolar plate is easily prevented. Since the uneven portions includes the step, when an electrolyte flows so as to traverse between the adjacent groove sections, the flow velocity of the electrolyte is easily significantly changed by the step-like difference in height, and diffusibility of the electrolyte is easily improved. Since the maximum difference in height of the step is 0.1 mm or more, positional misalignment of the electrode with respect to the bipolar plate can be prevented, and diffusibility of the electrolyte is easily improved. On the other hand, since the maximum difference in height of the step is 0.5 mm or less, the electrode is easily arranged without a gap with respect to the bipolar plate.

(3) A bipolar plate according to an embodiment of the present invention is
a bipolar plate for a battery, the bipolar plate having a surface on which a positive electrode is to be disposed and another surface on which a negative electrode is to be disposed,
in which at least one of the surfaces of the bipolar plate is provided with a plurality of groove sections through which an electrolyte flows and a ridge section located between the groove sections that are adjacent to each other,
the groove sections include an introduction groove section and a discharge groove section that are not in communication with each other,
the ridge section includes an uneven portion configured to suppress sliding of the positive electrode or the negative electrode in a direction in which the adjacent groove sections are arranged in parallel,
the uneven portion includes an inclined surface that inclines from one groove section side toward the other groove section side of the adjacent groove sections, and
the inclined surface has a difference in height of 0.1 mm or more and 0.5 mm or less.

Since the uneven portion includes the inclined surface, an edge of the inclined surface on the high portion side can catch the electrode, and thus positional misalignment of the electrode with respect to the bipolar plate is easily prevented. In addition, since the uneven portion includes the inclined surface, when an electrolyte flows so as to traverse between the adjacent groove sections, the flow velocity of the electrolyte is easily significantly changed by the difference in height of the inclined surface, and diffusibility of the electrolyte is easily improved. Since the difference in height of the inclined surface is 0.1 mm or more, positional misalignment of the electrode with respect to the bipolar plate can be prevented, and diffusibility of the electrolyte is easily improved. On the other hand, since the difference in height of the inclined surface is 0.5 mm or less, it is easy to arrange the electrode without a gap with respect to the bipolar plate.

(4) An example of the bipolar plate may be
an embodiment in which the introduction groove section and the discharge groove section satisfy any one of (A) to (C) below:
(A) the introduction groove section and the discharge groove section each include a comb-tooth-shaped region to form an interdigitated, opposed comb-tooth shape in which the comb teeth are disposed to face each other in an interdigitated manner;
(B) the introduction groove section and the discharge groove section each include a comb-tooth-shaped region to form a non-interdigitated, opposed comb-tooth shape in which the comb teeth are not interdigitated with each other; and
(C) at least one of the introduction groove section and the discharge groove section is formed by a plurality of discontinuous groove sections.

Regarding the embodiment of (A) above, the term "comb-tooth shape" refers to a shape that includes a long main groove extending in one direction and a plurality of branch grooves branched from the main groove in parallel in the same direction. The expression "the introduction groove section and the discharge groove section that are not in communication with each other each include a comb-tooth-shaped region" means that in each of the introduction groove section and the discharge groove section, branch grooves (comb teeth) that are independent from each other protrude from an independent main groove. Furthermore, the expression "comb teeth are disposed to face each other in an interdigitated manner" means that comb teeth of the introduction groove section and comb teeth of the discharge groove section are alternately arranged with each other in plan view.

When the comb teeth of the introduction groove section and the discharge groove section are disposed to face each other in an interdigitated manner, the comb teeth of the introduction groove section and the comb teeth of the discharge groove section are arranged in parallel, and a battery reaction in the electrode is conducted so that an electrolyte traverses between the comb teeth that are arranged in parallel. The amount of electrolyte flowing through a battery reaction zone extending so as to traverse between the comb teeth easily increases compared with the case where the introduction groove section and the discharge groove section are not interdigitated. Therefore, according to the above configuration, activation of the battery reaction in the battery reaction zone of the electrode can be expected, the flowing state of the electrolyte in the battery reaction zone of the electrode becomes easily uniform over the entire electrode, and the battery reaction is easily uniformly conducted over a wide range of the electrode.

Regarding the embodiment of (B) above, even in the case of the non-interdigitated, opposed comb-tooth shape, a region that is disposed to face a ridge section located between adjacent groove sections functions as battery a reaction zone. Accordingly, activation of the battery reaction can be expected compared with the case where the introduction groove section and the discharge groove section communicate with each other.

Regarding the embodiment of (C) above, the term "a plurality of discontinuous groove sections" means that the introduction groove section and/or the discharge groove section is formed by a plurality of groove groups disposed at intervals in the longitudinal direction thereof. Also in this case, a region that is disposed to face a ridge section located between adjacent groove sections functions as battery a reaction zone. Accordingly, activation of the battery reaction can be expected compared with the case where the introduction groove section and the discharge groove section communicate with each other.

(5) A cell frame according to an embodiment of the present invention includes the bipolar plate according to any one of (1) to (4) above and a frame body disposed on an outer periphery of the bipolar plate.

Since the cell frame includes the bipolar plate according to an embodiment of the present invention, even during assembly of a battery cell, occurrence of positional misalignment between the electrode and the bipolar plate can be easily prevented. In addition, the electrolyte can be forcibly diffused into the electrode disposed so as to face the ridge section, and thus battery reactivity can be presumably improved.

(6) A cell stack according to an embodiment of the present invention is obtained by stacking the cell frame according to (5) above, a positive electrode, a membrane, and a negative electrode a plurality of times.

Since the cell stack includes the cell frame according to an embodiment of the present invention, even during assembly of a battery cell (cell stack), occurrence of positional misalignment between the electrode and the bipolar plate can be easily prevented. In addition, the electrolyte can be forcibly diffused into the electrode disposed so as to face the ridge section, and thus battery reactivity can be presumably improved.

(7) A redox flow battery according to an embodiment of the present invention includes the cell stack according to (6) above.

Since the redox flow battery includes the cell stack according to an embodiment of the present invention, even during assembly of a battery cell (cell stack), occurrence of positional misalignment between the electrode and the bipolar plate can be easily prevented. In addition, the electrolyte can be forcibly diffused into the electrode disposed so as to face the ridge section, and thus battery reactivity can be presumably improved.

### [Details of Embodiments of the Present Invention]

A bipolar plate included in a redox flow battery (RF battery) according to an embodiment of the present invention and an RF battery including the bipolar plate will now be described in detail with reference to the drawings. In the drawings, the same reference signs denote the same components.

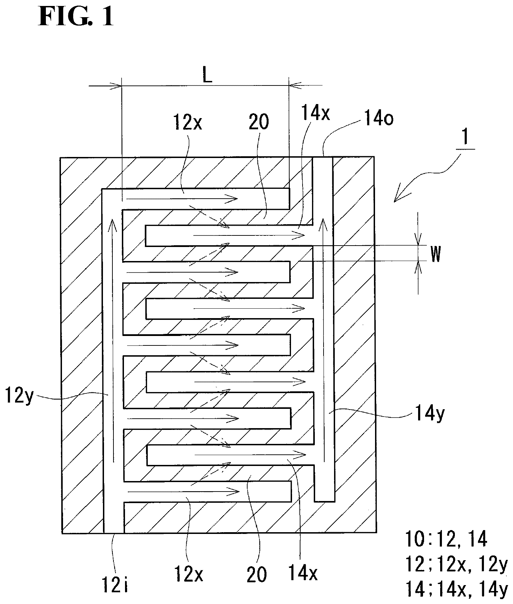

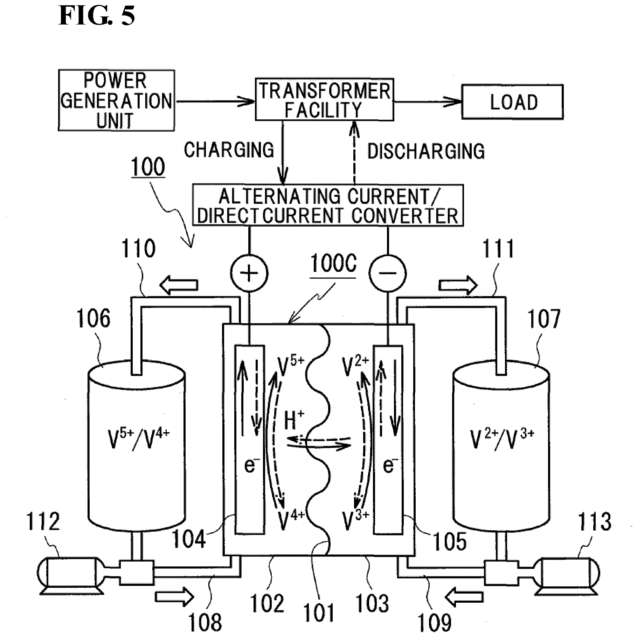

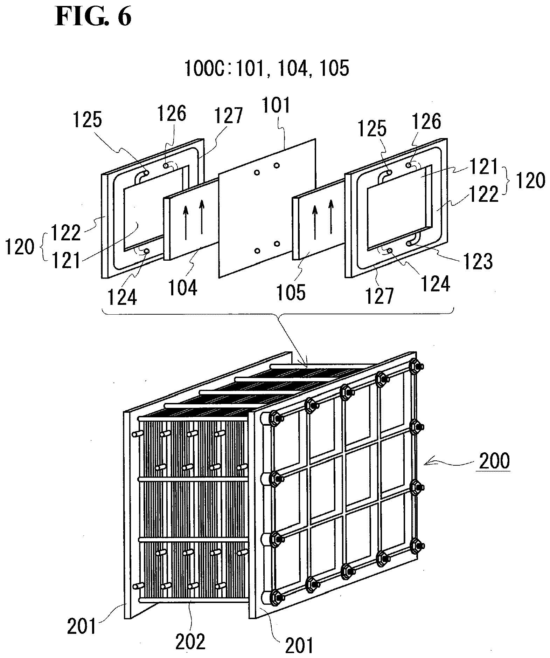

First, a basic configuration of an RF battery system including an RF battery 100 according to an embodiment will be described with reference to Figs. 5 and 6. Next, embodiments of a bipolar plate included in the RF battery 100 of the embodiment will be described with reference to Figs. 1 to 4.

### [Overview of RF Battery]

The RF battery 100 according to the embodiment is used by constructing an RF battery system including a circulation mechanism that circulates and supplies electrolytes to the RF battery 100, as illustrated in Fig. 5. The RF battery 100 is typically connected, through an alternating current/direct current converter, a transformer facility, and the like, to a power generation unit and a load such as a power system or a consumer. The RF battery 100 performs charging using the power generation unit as a power supply and performs discharging to the load as a power consumption target. Examples of the power generation unit include solar power generation apparatuses, wind power generation apparatuses, and other general power plants.

### [Basic Configuration of RF Battery]

The RF battery 100 includes a battery cell 100C that is divided into a positive electrode cell 102 and a negative electrode cell 103 by a membrane 101. The positive electrode cell 102 includes therein a positive electrode 104 to which a positive electrode electrolyte is supplied. The negative electrode cell 103 includes therein a negative electrode 105 to which a negative electrode electrolyte is supplied. Typically, the RF battery 100 includes a plurality of the battery cells 100C and bipolar plates 121 (Fig. 6) disposed between the respective adjacent battery cells 100C.

Each of the positive electrode 104 and the negative electrode 105 is a reaction site in which active material ions contained in a supplied electrolyte conduct a battery reaction. The membrane 101 is a separation member that separates the positive electrode 104 and the negative electrode 105 from each other and that allows specific ions to permeate therethrough. The bipolar plate 121 is a conductive member that is disposed between the positive electrode 104 and the negative electrode 105 and that allows an electric current to flow but does not allow electrolytes to flow therethrough. Typically, as illustrated in Fig. 6, the bipolar plate 121 is used in a state of a cell frame 120 that includes a frame body 122 provided on the outer periphery of the bipolar plate 121. The frame body 122 has liquid supply holes 123 and 124 through which electrolytes are supplied to the electrodes 104 and 105 disposed on the bipolar plate 121 and liquid drainage holes 125 and 126 through which the electrolytes are discharged from the electrodes 104 and 105, the liquid supply holes 123 and 124 and the liquid drainage holes 125 and 126 being opened on front and back surfaces of the frame body 122. A sealing member 127 such as an O-ring is disposed on the frame body 122 so as to surround the entire circumference of the frame body 122.

The plurality of battery cells 100C are stacked and used in the form of a cell stack 200. As illustrated in Fig. 6, the cell stack 200 is formed by stacking a bipolar plate 121 of a cell frame 120, a positive electrode 104, a membrane 101, a negative electrode 105, and a bipolar plate 121 of another cell frame 120 in that order repeatedly. On the electrodes 104 and 105 located on both ends of the cell stack 200 in a direction in which the battery cells 100C are stacked, current collector plates (not illustrated) are disposed instead of the bipolar plates 121. On both ends of the cell stack 200 in the direction in which the battery cells 100C are stacked, end plates 201 are typically disposed. The battery cells 100C between the pair of end plates 201 are integrated by being connected together by using connecting members 202 such as long bolts.

### [Overview of RF Battery System]

The RF battery system includes an RF battery 100, and a positive electrode circulation mechanism and a negative electrode circulation mechanism described below. The RF battery system circulates and supplies the positive electrode electrolyte to the positive electrode 104 and circulates and supplies the negative electrode electrolyte to the negative electrode 105. Figure 5 illustrates an operating principle of a vanadium-based RF battery 100 that uses a vanadium electrolyte containing vanadium (V) ions as active materials of the positive electrode electrolyte and the negative electrode electrolyte. Through the circulation and supply, the RF battery 100 conducts charging and discharging accompanying a valence change reaction of an ion serving as the active material in the electrolyte for each electrode. In the battery cell 100C in Fig. 5, the solid-line arrows indicate a charging reaction, and the broken-line arrows indicate a discharging reaction.

The positive electrode circulation mechanism includes a positive electrode tank 106 that stores a positive electrode electrolyte to be supplied to the positive electrode 104, pipes 108 and 110 that connect the positive electrode tank 106 and the RF battery 100, and a pump 112 provided on the pipe 108 on the supply side. Similarly, the negative electrode circulation mechanism includes a negative electrode tank 107 that stores a negative electrode electrolyte to be supplied to the negative electrode 105, pipes 109 and 111 that connect the negative electrode tank 107 and the RF battery 100, and a pump 113 provided on the pipe 109 on the supply side. By stacking a plurality of cell frames 120, the liquid supply holes 123 and 124 and the liquid drainage holes 125 and 126 (Fig. 6) form electrolyte flow ducts, and the pipes 108 to 111 are connected to the ducts. The basic configuration of the RF battery system may be obtained by appropriately using a known configuration.

### [Main Feature of RF Battery]

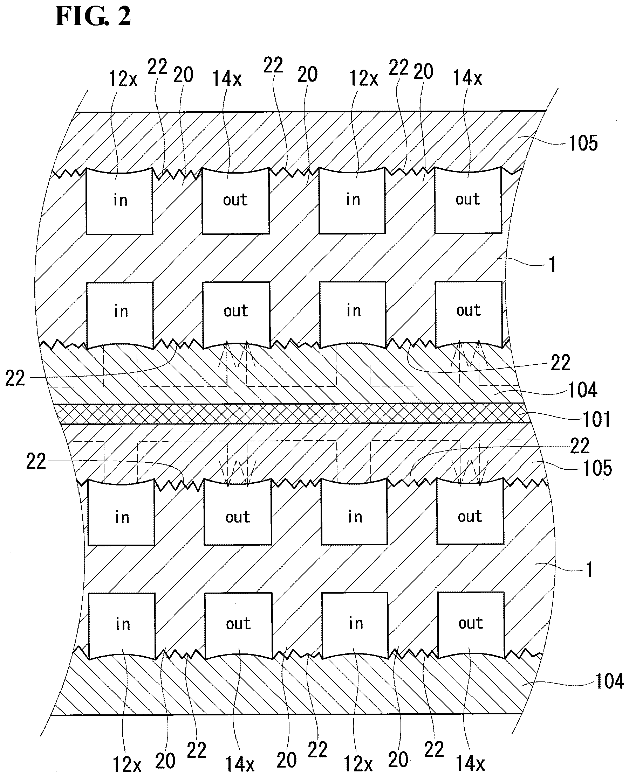

The RF battery 100 of the embodiment includes a bipolar plate including a plurality of groove sections through which an electrolyte flows and a ridge section located between the adjacent groove sections, the groove sections and the ridge section being disposed on at least one of a surface facing the positive electrode 104 and a surface facing the negative electrode 105. A feature of this bipolar plate lies in that the bipolar plate has a configuration in which when the positive electrode 104 or the negative electrode 105 is disposed on the bipolar plate, positional misalignment of the electrode 104 or 105 with respect to the bipolar plate can be prevented. Specifically, the ridge section includes an uneven portion configured to suppress sliding of the positive electrode 104 or the negative electrode 105 in a direction in which the adjacent groove sections are arranged in parallel. Bipolar plates included in the RF battery 100 according to the above-described embodiment will now be described in detail. For the sake of convenience of explanation, each of the bipolar plates illustrated in Figs. 2 to 4 has a larger thickness than the positive electrode 104 and the negative electrode 105.

### «Embodiment 1»

A bipolar plate 1 according to Embodiment 1 will be described with reference to Figs. 1 and 2. The bipolar plate 1 is a rectangular flat plate as illustrated in Fig. 1. On front and back surfaces of the bipolar plate 1, a positive electrode 104 and a negative electrode 105 of adjacent battery cells 100C are disposed. The bipolar plate 1 includes, on surfaces facing the electrodes 104 and 105, a plurality of groove sections 10 and ridge sections 20 located between the respective adjacent groove sections 10. The plurality of groove sections 10 function as a flow path in which an electrolyte flows and are provided in order to adjust flows of electrolytes in each of the battery cells 100C, the electrolytes being allowed to flow through the electrodes 104 and 105 by the pumps 112 and 113, respectively. A positive electrode electrolyte is allowed to flow in the groove sections 10 provided on one surface of the bipolar plate 1 on which the positive electrode 104 is disposed to face the bipolar plate 1. A negative electrode electrolyte is allowed to flow in the groove sections 10 provided on the other surface of the bipolar plate 1 on which the negative electrode 105 is disposed to face the bipolar plate 1. The flow of the electrolyte in each of the battery cell 100C can be controlled by adjusting, for example, the shape and dimensions of the groove sections 10.

### • Groove section

As illustrated in Fig. 1, the groove sections 10 include an introduction groove section 12 through which an electrolyte is introduced into a corresponding electrode and a discharge groove section 14 through which the electrolyte is discharged from the corresponding electrode. The introduction groove section 12 and the discharge groove section 14 are not in communication with each other but are independent from each other. The introduction groove section 12 and the discharge groove section 14 each include a comb-tooth-shaped region. This embodiment provides an interdigitated, opposed comb-tooth shape in which comb teeth of the introduction groove section 12 and comb teeth of the discharge groove section 14 are disposed to face each other in an interdigitated manner.

The introduction groove section 12 includes an introduction port 12i through which is connected to the liquid supply hole 123 (or 124, Fig. 6) and through which an electrolyte is supplied, a single introduction longitudinal groove section 12y connected to the introduction port 12i and extending in the longitudinal direction of the bipolar plate 1 (in the up-down direction in Fig. 1), and a plurality of introduction lateral groove sections 12x extending from the introduction longitudinal groove section 12y in the lateral direction of the bipolar plate 1 (in the left-right direction in Fig. 1) and arranged in parallel with a predetermined distance W (Fig. 1). The introduction port 12i, the introduction longitudinal groove section 12y, and the introduction lateral groove sections 12x are continuous.

The discharge groove section 14 has a shape similar to the introduction groove section 12. The discharge groove section 14 includes a discharge port 14o through which is connected to the liquid drainage hole 125 (or 126, Fig. 6) and through which the electrolyte flowing from the introduction groove section 12 through the electrode 104 or 105 is discharged, a single discharge longitudinal groove section 14y connected to the discharge port 14o and extending in the longitudinal direction of the bipolar plate 1, and a plurality of discharge lateral groove sections 14x extending from the discharge longitudinal groove section 14y in the lateral direction of the bipolar plate 1 and arranged in parallel with a predetermined distance W. The discharge port 14o, the discharge longitudinal groove section 14y, and the discharge lateral groove sections 14x are continuous.

In this embodiment, as illustrated in Fig. 2, each of the groove sections 10 has a rectangular sectional shape. The sectional shape of the groove section 10 may be a V-shape, a U-shape, a semicircular shape, or the like besides a rectangular shape. In this embodiment, in the case where the groove sections 10 are provided on the front and back surfaces of the bipolar plate 1, the bipolar plate 1 includes the lateral groove sections 12x and 14x at different positions in perspective plan view. The groove sections 10 maybe provided such that the lateral groove sections 12x and 14x are located at positions that partially overlap or at positions that do not overlap in perspective plan view of the bipolar plate 1.

### • Ridge section

As illustrated in Figs. 1 and 2, the ridge sections 20 are sections located between adjacent groove sections 10. In this embodiment, the groove sections 10 form an interdigitated, opposed comb-tooth shape in which comb teeth of the introduction groove section 12 and comb teeth of the discharge groove section 14 are disposed to face each other in an interdigitated manner. Accordingly, the term "ridge section 20" refers to a section located between the introduction lateral groove section 12x and the discharge lateral groove section 14x (refer to Fig. 2). The ridge sections 20 form most of the outermost surface of the bipolar plate 1. Therefore, when the battery cell 100C is assembled, the ridge sections 20 contact the electrodes 104 and 105.

As illustrated in Fig. 2, each of the ridge sections 20 has an uneven portion 22 configured to suppress sliding of the electrode 104 or 105 in a direction in which an introduction lateral groove section 12x and a discharge lateral groove section 14x that are adjacent to each other are arranged in parallel. A feature of this embodiment lies in that the uneven portion 22 is formed by a rough surface provided on a surface of the ridge section 20.

The rough surface forming the uneven portion 22 has a surface roughness of 0.1 µm or more and 10 µm or less in terms of arithmetical mean roughness Ra. In general, the positive electrode 104 and the negative electrode 105 are each formed of a porous body including fibers. When the surface roughness of the rough surface is 0.1 µm or more in terms of arithmetical mean roughness Ra, the ridge sections 20 can catch the fibers that form the electrodes 104 and 105. Thus, positional misalignment of the electrodes 104 and 105 with respect to the bipolar plate 1 can be prevented. On the other hand, when the surface roughness of the rough surface is 10 µm or less in terms of arithmetical mean roughness Ra, it is easy to arrange the electrodes 104 and 105 without gaps with respect to the bipolar plate 1. This is because if a gap is formed between the bipolar plate 1 and the electrode 104 or 105, an electrolyte that flows so as to traverse between adjacent groove sections 12x and 14x over a ridge section 20 is difficult to diffuse into the electrode 104 or 105, and the electrolyte may remain in an unreacted state. The surface roughness of the rough surface is more preferably 6.4 µm or less, 3.2 µm or less, and particularly preferably 0.2 µm or more and 1.6 µm or less in terms of arithmetical mean roughness Ra.

In the bipolar plate 1, each of the electrolytes introduced from the introduction port 12i flows along the groove sections 10 (in the directions indicated by the solid-line arrows in Fig. 1) and flows to traverse in a width direction (in the up-down direction in Fig. 1) over each ridge section 20 between the corresponding introduction lateral groove section 12x and discharge lateral groove section 14x (in the directions indicated by the broken-line arrows in Fig. 1). The electrolytes flowing through the groove sections 10 during the time in which the electrolytes are introduced from the introduction ports 12i and reach the discharge ports 14o permeate and diffuse into the electrodes 104 and 105 disposed so as to face the bipolar plate 1. The electrolytes that permeate and diffuse into the electrodes 104 and 105 conduct battery reactions in the electrodes 104 and 105. In this embodiment, since each of the electrolytes flows so as to traverse over the ridge sections 20, the amount of electrolyte that is discharged in an unreacted state can be decreased. In particular, since the ridge sections 20 include uneven portions 22, the flow velocities of electrolytes are changed by a minute difference in height of the uneven portions 22, and thus turbulent flows of the electrolytes can be presumably generated. When turbulent flows are generated in the ridge sections 20, the electrolytes are forcibly diffused into the electrodes 104 and 105 disposed so as to face the ridge sections 20, active material ions contained in the electrolytes can be uniformly supplied into the electrodes 104 and 105, and thus battery reactivity can be presumably improved.

With an increase in a length L (Fig. 1) of the portion where the comb teeth of the introduction groove section 12 and the comb teeth of the discharge groove section 14 are interdigitated with each other, the amount of electrolyte that flows so as to traverse over the ridge sections 20 presumably increases. Accordingly, the length of the interdigitated portion may be 80% or more, and furthermore, 90% or more of the length of the bipolar plate 1 (the length in the left-right direction in Fig. 1).

In addition, with an increase in the distance W between the introduction groove section 12 and the discharge groove section 14, that is, a width W of each of the ridge sections 20, the amount of electrolyte that flows so as to traverse over the ridge sections 20 presumably increases. Accordingly, the length of the width W of each of the ridge sections 20 may be 100% or more and 700% or less, and furthermore, 200% or more and 500% or less of the width of each of the groove sections 10.

In this embodiment, the uneven portion 22 is provided over the entire width W of the corresponding ridge section 20. Alternatively, the uneven portion 22 may be partially provided on the ridge section 20 in the width direction.

A conductive material with a low electrical resistance that does not react with an electrolyte and has electrolyte resistance (such as chemical resistance and acid resistance) can be suitably used as the constituent material of the bipolar plate 1. Furthermore, the constituent material of the bipolar plate 1 preferably has suitable rigidity. This is because the shape and the dimensions of the groove sections 10 are unlikely to change for a long period of time, and it is easy to maintain the effect reducing flow resistance and the effect of reducing a pressure loss that are achieved by the groove sections 10. Specific examples of the constituent material include a composite material containing a carbon material and an organic material. More specifically, examples thereof include conductive plastics containing a conductive inorganic material, such as graphite, and an organic material, such as a polyolefin-based organic compound or a chlorinated organic compound.

Examples of the carbon material include, in addition to graphite, carbon black and diamond like carbon (DLC). Examples of carbon black include acetylene black and furnace black. The carbon material preferably contains graphite. The carbon material may contain mainly graphite and partly at least one of carbon black and DLC. The conductive inorganic material may contain, in addition to the carbon material, a metal such as aluminum. Examples of the conductive inorganic material include powders and fibers.

Examples of the polyolefin-based organic compound include polyethylene, polypropylene, and polybutene. Examples of the chlorinated organic compound include vinyl chloride, chlorinated polyethylene, and chlorinated paraffin.

The bipolar plate 1 described above can be produced by forming the above constituent material to have a plate shape by a known method, such as injection molding, press molding, or vacuum molding, and forming, in addition to the groove sections 10 and the ridge sections 20, the uneven portions 22 on the ridge sections 20. When the groove sections 10 and the uneven portions 22 are simultaneously formed, good productivity of the bipolar plate 1 can be achieved. Alternatively, the groove sections 10 and the uneven portions 22 may be formed by, for example, cutting a flat plate that is not provided with the groove sections 10. The rough surface may be formed on the ridge sections 20 by subjecting the ridge sections 20 to blasting.

### «Embodiment 2»

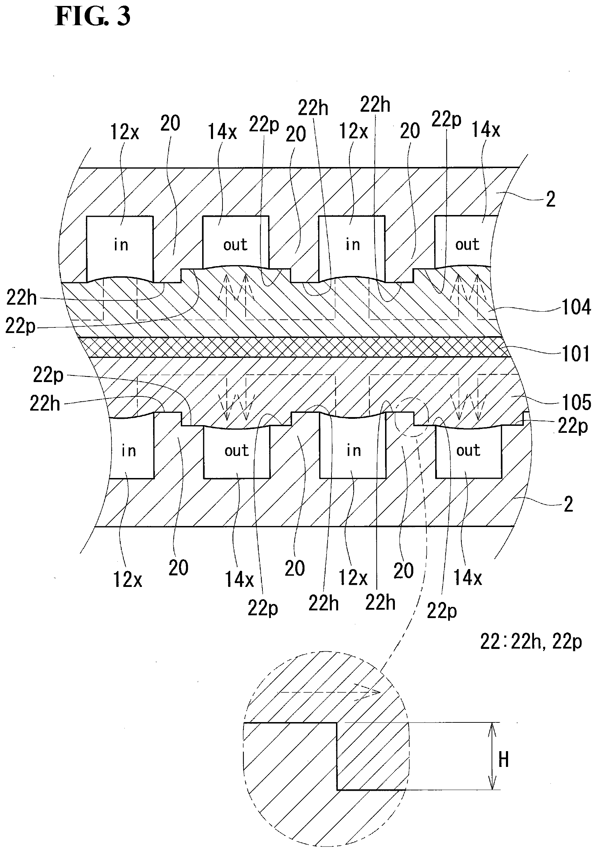

A bipolar plate 2 according to Embodiment 2 will be described with reference to Fig. 3. A feature of the bipolar plate 2 lies in that uneven portions 22 included in ridge sections 20 are each formed by a step. The bipolar plate 2 of Embodiment 2 differs from the bipolar plate 1 of Embodiment 1 in the form of the uneven portions 22, and other configurations of the bipolar plate 2 of Embodiment 2 are the same as those of the bipolar plate 1 of Embodiment 1. Figure 3 illustrates only one surface side of the bipolar plate 2.

As illustrated in Fig. 3, a step H that forms an uneven portion 22 has a difference in height in a direction in which an introduction lateral groove section 12x and a discharge lateral groove section 14x that are adjacent to each other are arranged in parallel. In this embodiment, a single step is provided such that the thickness of the bipolar plate 2 decreases from the introduction lateral groove section 12x side toward the discharge lateral groove section 14x side. In this embodiment, the introduction lateral groove section 12x side is referred to as a "high portion 22h", and the discharge lateral groove section 14x side is referred to as a "low portion 22p".

The step H that forms each of the uneven portions 22 has a maximum difference in height of 0.1 mm or more and 0.5 mm or less. When the maximum difference in height of the step is 0.1 mm or more, ridge line portions formed by the high portions 22h and the low portions 22p can catch the electrodes 104 and 105, and thus positional misalignment of the electrodes 104 and 105 with respect to the bipolar plate 2 can be prevented. When the maximum difference in height of the step is 0.1 mm or more, the flow velocity of an electrolyte that flows from the introduction lateral groove section 12x side to the discharge lateral groove section 14x side through the ridge section 20 significantly changes, and a turbulent flow of the electrolyte is easily generated. The reason for this is as follows. When the battery cell 100C is assembled and compressed, as illustrated in Fig. 3, the distance between the bipolar plate 2 and the membrane 101 on the low portion 22p side is larger than that on the high portion 22h side, and thus the flow velocity on the low portion 22p side becomes lower than that on the high portion 22h side. On the other hand, when the maximum difference in height of the step is 0.5 mm or less, each of the electrodes 104 and 105 is easily arranged without a gap with respect to the bipolar plate 2. The maximum difference in height is more preferably 0.2 mm or more and 0.4 mm or less.

In this embodiment, a single step is provided in a central portion of each of the ridge sections 20 in the width direction. Alternatively, a plurality of steps may be provided. In this embodiment, the introduction lateral groove section 12x side forms the high portion 22h, and the discharge lateral groove section 14x side forms the low portion 22p. Alternatively, the introduction lateral groove section 12x side may form the low portion 22p, and the discharge lateral groove section 14x side may form the high portion 22h. In the case where a plurality of steps are provided on a single ridge section 20, it is not necessary that the height sequentially decrease or increase from one side toward the other side of the ridge section 20 in the width direction. For example, both sides in the width direction may form high portions 22h (low portions 22p) and a central portion may form a low portion 22p (high portion 22h). Alternatively, high portions 22h and low portions 22p may be irregularly provided.

Each of the ridge sections 20 of the bipolar plate 2 may have a smooth surface having a surface roughness of less than 1.0 µm in terms of arithmetical mean roughness Ra or a rough surface having a surface roughness of 1.0 µm or more in terms of Ra.

### «Embodiment 3»

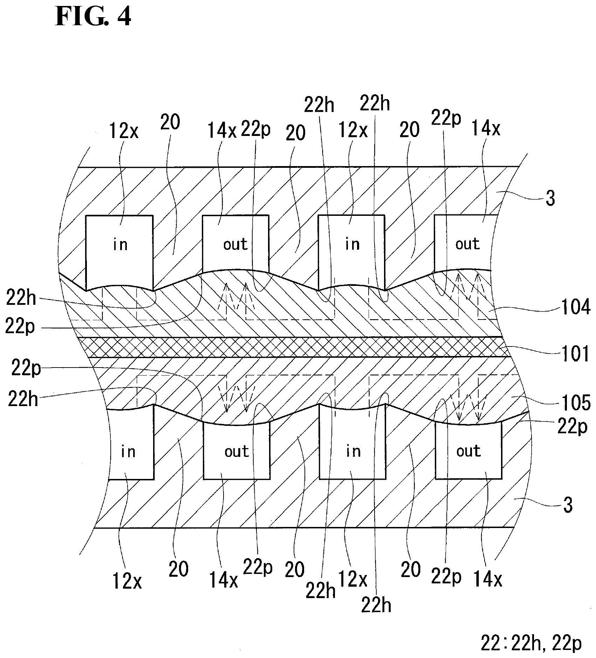

A bipolar plate 3 according to Embodiment 3 will be described with reference to Fig. 4. A feature of the bipolar plate 3 lies in that uneven portions 22 included in ridge sections 20 are each formed by an inclined surface. The bipolar plate 3 of Embodiment 3 differs from the bipolar plate 1 of Embodiment 1 in the form of the uneven portions 22, and other configurations of the bipolar plate 3 of Embodiment 3 are the same as those of the bipolar plate 1 of Embodiment 1. Figure 4 illustrates only one surface side of the bipolar plate 3.

As illustrated in Fig. 4, the inclined surface that forms an uneven portion 22 inclines from the introduction lateral groove section 12x side toward the discharge lateral groove section 14x side of an introduction lateral groove section 12x and a discharge lateral groove section 14x that are adjacent to each other. In this embodiment, the inclined surface inclines such that the thickness of the bipolar plate 3 decreases from the introduction lateral groove section 12x side toward the discharge lateral groove section 14x side. In this embodiment, the introduction lateral groove section 12x side is referred to as a "high portion 22h", and the discharge lateral groove section 14x side is referred to as a "low portion 22p".

The inclined surface that forms each of the uneven portions 22 has a difference in height of 0.1 mm or more and 0.5 mm or less. When the difference in height of the inclined surface is 0.1 mm or more, the electrodes 104 and 105 can be caught on the high portion 22h side, and thus positional misalignment of the electrodes 104 and 105 with respect to the bipolar plate 3 can be prevented. When the difference in height of the inclined surface is 0.1 mm or more, the flow velocity of an electrolyte that flows from the introduction lateral groove section 12x side to the discharge lateral groove section 14x side through the ridge section 20 significantly changes, and a turbulent flow of the electrolyte is easily generated. The reason for this is as follows. When the battery cell 100C is assembled and compressed, as illustrated in Fig. 4, the distance between the bipolar plate 3 and the membrane 101 on the low portion 22p side is larger than that on the high portion 22h side, and thus the flow velocity on the low portion 22p side becomes lower than that on the high portion 22h side. On the other hand, when the difference in height of the inclined surface is 0.5 mm, each of the electrodes 104 and 105 is easily arranged without a gap with respect to the bipolar plate 3. The difference in height of the inclined surface is more preferably 0.2 mm or more and 0.4 mm or less.

In this embodiment, the inclined surface continuously inclines from a side edge of the introduction lateral groove section 12x to a side edge of the discharge lateral groove section 14x. Alternatively, in addition to an inclined surface, a flat surface or a step may be provided between the two side edges. In this embodiment, the introduction lateral groove section 12x side forms the high portion 22h, and the discharge lateral groove section 14x side forms the low portion 22p. Alternatively, the introduction lateral groove section 12x side may form the low portion 22p, and the discharge lateral groove section 14x side may form the high portion 22h.

Each of the ridge sections 20 of the bipolar plate 3 may have a smooth surface having a surface roughness of less than 1.0 µm in terms of arithmetical mean roughness Ra or a rough surface having a surface roughness of 1.0 µm or more in terms of Ra.

### «Modifications»

The bipolar plates 1 to 3 of Embodiments 1 to 3 may have any of the following arrangement forms of the groove sections 10.
(1) In the case of the interdigitated, opposed comb-tooth shape, comb teeth of the introduction groove section 12 and comb teeth of the discharge groove section 14 extend in the longitudinal direction (in the up-down direction in Fig. 1) and are alternately arranged in the lateral direction of the bipolar plate (in the left-right direction in Fig. 1).
(2) The groove sections 10 form a non-interdigitated, opposed comb-tooth shape in which the introduction groove section 12 and the discharge groove section 14 are not interdigitated with each other. For example, the groove sections 10 may have a form in which an introduction groove section and a discharge groove section are disposed to face each other with a distance therebetween in the lateral direction of the bipolar plate. Also in such a non-interdigitated comb-tooth shape, in each of the electrode 104 and 105, regions that are disposed to face the ridge sections located between adjacent groove sections each function as a battery reaction zone.
(3) At least one of the introduction groove section 12 and the discharge groove section 14 is formed not by a continuous groove section but by a plurality of discontinuous groove sections. For example, an introduction lateral groove section and/or a discharge lateral groove section may be formed by a plurality of groove groups disposed at intervals in the lateral direction thereof.

### [Other Constitutional Members of RF Battery]

### •Positive electrode and negative electrode

The positive electrode 104 and the negative electrode 105 are each disposed between the membrane 101 and the bipolar plate 1, 2, or 3. An electrolyte is supplied to each of the electrodes 104 and 105 mainly through the groove sections 10 of the bipolar plate 1, 2, or 3. The electrolyte permeates and diffuses into the corresponding electrode 104 or 105, and an active material in the electrolyte conducts a battery reaction on the corresponding electrode 104 or 105. For this purpose, each of the electrodes 104 and 105 is formed of a porous body having a large number of fine pores. As the constituent material of each of the electrodes 104 and 105, a porous body containing carbon fibers, for example, carbon felt or carbon paper can be suitably used. Known electrodes can be used.

### • Membrane

Examples of the membrane 101 include ion-exchange membranes such as cation-exchange membranes and anion-exchange membranes. Ion-exchange membranes have the features that (1) they have good isolation properties between ions of the positive electrode active material and ions of the negative electrode active material, and (2) they have good permeability of H⁺ ions, which are charge carriers in the battery cell 100C. Thus, ion-exchange membranes can be suitably used as the membrane 101. Known membranes can be used.

### [Electrolyte]

The electrolyte used in the RF battery 100 contains active material ions such as metal ions or non-metal ions. An example thereof is a vanadium-based electrolyte containing vanadium ions having different valences (Fig. 5) as a positive electrode active material and a negative electrode active material. Other examples thereof include an iron-chromium-based electrolyte containing iron (Fe) ions as the positive electrode active material and chromium (Cr) ions as the negative electrode active material, and a manganese-titanium-based electrolyte containing manganese (Mn) ions as the positive electrode active material and titanium (Ti) ions as the negative electrode active material. For example, an aqueous solution containing, in addition to the active materials, at least one acid selected from sulfuric acid, phosphoric acid, nitric acid, and hydrochloric acid or at least one salt of the acid can be used as the electrolyte.

### [Use]

The bipolar plates of the embodiments can be suitably used as bipolar plates of redox flow batteries. The redox flow batteries of the embodiments can be used as storage batteries for the purpose of, for example, stabilization of output fluctuation of power generation, storage of electricity when surplus power is generated, and load leveling for power generation using natural energy, such as solar power generation or wind power generation. The redox flow batteries of the embodiments may be additionally installed in typical power plants and used as storage batteries for the countermeasures against voltage sag/power failure and load leveling. In particular, the redox flow batteries of the embodiments can be suitably used as large-capacity storage batteries for the purposes described above.

### [Test Example 1]

In Test Example 1, a bipolar plate which included a flow path having an interdigitated comb-tooth shape and which was provided with ridge sections including uneven portions formed by steps was used (refer to Fig. 3), and a fluid simulation (numerical analysis using spreadsheet software of Excel (registered trademark) available from Microsoft Corporation) was conducted for an RF battery in which the above bipolar plate was assumed to be disposed at a predetermined position. Thus, a cell resistance of the RF battery was determined. In Test Example 1, the RF battery had a single-cell structure in which a battery cell including a positive electrode-membrane-negative electrode stack was sandwiched between cell frames each including the bipolar plate. Detailed conditions for the test are described below.

### •Bipolar plate

Dimensions: length 200 mm, width 198 mm, thickness 6.2 mm
Shape of groove section: interdigitated, opposed comb-tooth shape including introduction groove section and discharge groove section (refer to Fig. 3)

With regard to lateral groove sections
Number: 16 introduction groove sections × 16 discharge groove sections
Length L: 150 mm
Overlap length of comb teeth: 142 mm
Width of groove section: 1.3 mm
Depth of groove section: 1.0 mm
Sectional shape of groove section: rectangular shape
Width W of ridge section: 3.9 mm

With regard to longitudinal groove section
Length L: 170 mm
Constituent material: bipolar plate obtained by compacting 80% by mass of graphite and 20% by mass of polypropylene as matrix resin

### ·Electrode

Dimensions: length 170 mm, width 150 mm, thickness 0.5 mm
Constituent material: carbon felt containing carbon fiber and binder carbon
GDL10AA available from SGL CARBON JAPAN Co., Ltd.

### ·Membrane

Constituent material: Nafion (registered trademark) 212 available from E. I. du Pont de Nemours and Company

### ·Electrolyte

Composition: aqueous V sulfate solution (V concentration: 1.7 mol/L, sulfuric acid concentration: 4.3 mol/L)
Flow rate: 300 mL/min

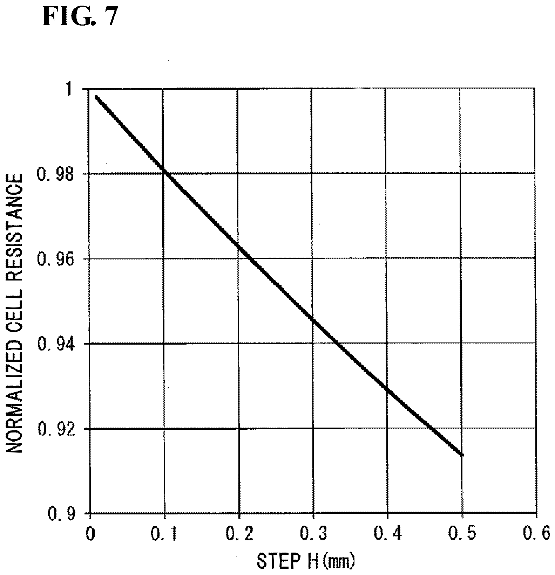

Figure 7 shows a graph of a cell resistance (normalized on the assumption that the cell resistance when a step H is 0 mm is 1) when the step H formed on each ridge section of the bipolar plate (uneven portion: maximum difference in height) was changed. In Fig. 7, the horizontal axis represents the step H (mm), and the vertical axis represents the normalized cell resistance. Referring to Fig. 7, as compared with a cell resistance Rs when the step H was 0.01 mm, a ratio of decrease in a cell resistance Rx ((Rs - Rx)/Rs) was as follows when the step H was changed. The ratio of decrease was about 2% when the step H was 0.1 mm, the ratio of decrease was about 4% when the step H was 0.2 mm, the ratio of decrease was about 6% when the step H was 0.3 mm, the ratio of decrease was about 7% when the step H was 0.4 mm, and the ratio of decrease was about 9% when the step H was 0.5 mm. Specifically, the results show that with an increase in the step H, the cell resistance is decreased, and the electrolyte has good diffusibility. However, if the step H is excessively large, a gap is formed between the bipolar plate and the positive electrode or between the bipolar plate and the negative electrode, it is difficult for the electrolyte that flows so as to traverse between adjacent groove sections over a ridge section to diffuse into the electrodes, and the electrolyte may remain in an unreacted state. In addition, when the step H is increased and the gap between the bipolar plate and the positive electrode or between the bipolar plate and the negative electrode is increased, the compression ratio decreases, which may result in a problem of an increase in the contact resistance between the bipolar plate and the positive electrode or between the bipolar plate and the negative electrode. Accordingly, the step H is preferably 0.5 mm or less.

The present invention is not limited to the examples. The scope of the present invention is defined by the appended claims and is intended to include all modifications within the scope of the claims. For example, specifications of the groove sections (such as the sizes, shapes, and numbers of the lateral groove sections and the longitudinal groove sections) of the bipolar plate, the type of electrolyte, and the like may be changed.

### Reference Signs List

| | | | |
|---|---|---|---|
| 100 redox flow battery (RF battery) | | | |
| 100C battery cell | | | |
| 101 membrane | | | |
| 102 positive electrode cell | 103 negative electrode cell | | |
| 104 positive electrode | 105 negative electrode | | |
| 106 positive electrode tank | 107 negative electrode tank | | |
| 108 to 111 pipe | | | |
| 112, 113 pump | | | |
| 200 cell stack 201 end plate | 202 connecting member | | |
| 120 cell frame 121 bipolar plate | 122 frame body | | |
| 123,124 liquid supply hole | 125,126 liquid drainage hole | | |
| 127 sealing member | | | |
| 1,2,3 bipolar plate | | | |
| 10 groove section | | | |
| 12 introduction groove section | 12i introduction port | | |
| 12x introduction lateral groove section | 12y introduction longitudinal groove section | | |
| 14 discharge groove section | 14o discharge port | | |
| 14x discharge lateralgroove section | 14y discharge longitudinal groove section | | |
| 20 ridge section | 22 uneven portion | 22h high portion | 22p low portion |

## Claims

1. A bipolar plate for a battery, the bipolar plate (1) having a surface on which a positive electrode (104) is to be disposed and another surface on which a negative electrode (105) is to be disposed,
wherein at least one of the surfaces of the bipolar plate (1) is provided with a plurality of groove sections (10) through which an electrolyte flows and a ridge section (20) located between the groove sections (10) that are adjacent to each other,
the groove sections (10) include an introduction groove section (12) and a discharge groove section (14) that are not in communication with each other,
**characterized in that**:
the ridge section (20) includes an uneven portion (22) configured to suppress sliding of the positive electrode (104) or the negative electrode (105) in a direction in which the adjacent groove sections (10) are arranged in parallel,
the uneven portion (22) includes a rough surface provided on at least a part of a surface of the ridge section (20), and
the rough surface has a surface roughness of 0.1 pm or more and 10 pm or less in terms of arithmetical mean roughness Ra.

2. A bipolar plate for a battery, the bipolar plate (1) having a surface on which a positive electrode (104) is to be disposed and another surface on which a negative electrode (105) is to be disposed,
wherein at least one of the surfaces of the bipolar plate (1) is provided with a plurality of groove sections (10) through which an electrolyte flows and a ridge section (20) located between the groove sections (10) that are adjacent to each other,
the groove sections (10) include an introduction groove section (12) and a discharge groove section (14) that are not in communication with each other,
**characterized in that**:
the ridge section (20) includes an uneven portion (22) configured to suppress sliding of the positive electrode (104) or the negative electrode (105) in a direction in which the adjacent groove sections (10) are arranged in parallel,
the uneven portion (22) includes a step provided so as to have a difference in height in the direction in which the adjacent groove sections (10) are arranged in parallel, and
the step has a maximum difference in height of 0.1 mm or more and 0.5 mm or less.

3. A bipolar plate for a battery, the bipolar plate (1) having a surface on which a positive electrode (104) is to be disposed and another surface on which a negative electrode (105) is to be disposed,
wherein at least one of the surfaces of the bipolar plate (1) is provided with a plurality of groove sections (10) through which an electrolyte flows and a ridge section (20) located between the groove sections (10) that are adjacent to each other,
the groove sections (10) include an introduction groove section (12) and a discharge groove section (14) that are not in communication with each other,
**characterized in that**:
the ridge section (20) includes an uneven portion (22) configured to suppress sliding of the positive electrode (104) or the negative electrode (105) in a direction in which the adjacent groove sections (10) are arranged in parallel,
the uneven portion (22) includes an inclined surface that inclines from one groove section side toward the other groove section side of the adjacent groove sections (10), and
the inclined surface has a difference in height of 0.1 mm or more and 0.5 mm or less.

4. The bipolar plate according to any one of Claims 1 to 3, wherein the introduction groove section (12) and the discharge groove section (14) satisfy any one of (A) to (C) below:
(A) the introduction groove section (12) and the discharge groove section (14) each include a comb-tooth-shaped region to form an interdigitated, opposed comb-tooth shape in which the comb teeth are disposed to face each other in an interdigitated manner;
(B) the introduction groove section (12) and the discharge groove section (14) each include a comb-tooth-shaped region to form a non-interdigitated, opposed comb-tooth shape in which the comb teeth are not interdigitated with each other; and
(C) at least one of the introduction groove section (12) and the discharge groove section (14) is formed by a plurality of discontinuous groove sections.

5. A cell frame comprising the bipolar plate (1) according to any one of Claims 1 to 4 and a frame body (122) disposed on an outer periphery of the bipolar plate (1).

6. A cell stack obtained by stacking the cell frame according to Claim 5, a positive electrode (104), a membrane (101), and a negative electrode (105) a plurality of times.

7. A redox flow battery comprising the cell stack according to Claim 6.

## Patentansprüche

1. Bipolarplatte für eine Batterie, wobei die Bipolarplatte (1) eine Oberfläche aufweist, auf der eine positive Elektrode (104) angeordnet werden soll, und eine andere Oberfläche, auf der eine negative Elektrode (105) angeordnet werden soll,
wobei mindestens eine der Oberflächen der Bipolarplatte (1) mit einer Vielzahl von Rillenbereichen (10) bereitgestellt ist, durch die ein Elektrolyt fließt, und einem Gratbereich (20), der zwischen den Rillenbereichen (10) positioniert ist, die aneinander angrenzend sind,
wobei die Rillenbereiche (10) einen Einleitungsrillenbereich (12) und einen Ausleitungsrillenbereich (14) einschließen, die miteinander nicht in Kommunikation stehen,
**dadurch gekennzeichnet, dass**:
der Gratbereich (20) einen unebenen Abschnitt (22) einschließt, der ausgelegt ist, um Gleiten der positiven Elektrode (104) oder der negativen Elektrode (105) in einer Richtung, in die der angrenzenden Rillenbereiche (10) parallel angeordnet sind, zu unterbinden,
der unebene Abschnitt (22) eine raue Oberfläche einschließt, die auf mindestens einem Teil einer Oberfläche des Gratbereichs (20) bereitgestellt ist, und
die raue Oberfläche eine Oberflächenrauheit von 0.1 pm oder mehr und 10 pm oder weniger im Sinne einer arithmetischen Durchschnittsrauheit Ra aufweist.

2. Bipolarplatte für eine Batterie, wobei die Bipolarplatte (1) eine Oberfläche aufweist, auf der eine positive Elektrode (104) angeordnet werden soll, und eine andere Oberfläche, auf der eine negative Elektrode (105) angeordnet werden soll,
wobei mindestens eine der Oberflächen der Bipolarplatte (1) mit einer Vielzahl von Rillenbereichen (10) bereitgestellt ist, durch die ein Elektrolyt fließt, und einem Gratbereich (20), der zwischen den Rillenbereichen (10) positioniert ist, die aneinander angrenzend sind,
wobei die Rillenbereiche (10) einen Einleitungsrillenbereich (12) und einen Ausleitungsrillenbereich (14) einschließen, die miteinander nicht in Kommunikation stehen,
**dadurch gekennzeichnet, dass**:
der Gratbereich (20) einen unebenen Abschnitt (22) einschließt, der ausgelegt ist, um Gleiten der positiven Elektrode (104) oder der negativen Elektrode (105) in einer Richtung, in die der angrenzenden Rillenbereiche (10) parallel angeordnet sind, zu unterbinden,
der unebene Abschnitt (22) eine Stufe einschließt, die so bereitgestellt ist, dass sie einen Höhenunterschied in der Richtung, in der die angrenzenden Rillenbereiche (10) parallel angeordnet sind, aufweist, und
die Stufe einen maximalen Höhenunterschied von 0,1 mm oder mehr und 0,5 mm oder weniger aufweist.

3. Bipolarplatte für eine Batterie, wobei die Bipolarplatte (1) eine Oberfläche aufweist, auf der eine positive Elektrode (104) angeordnet werden soll, und eine andere Oberfläche, auf der eine negative Elektrode (105) angeordnet werden soll,
wobei mindestens eine der Oberflächen der Bipolarplatte (1) mit einer Vielzahl von Rillenbereichen (10) bereitgestellt ist, durch die ein Elektrolyt fließt, und einem Gratbereich (20), der zwischen den Rillenbereichen (10) positioniert ist, die aneinander angrenzend sind,
wobei die Rillenbereiche (10) einen Einleitungsrillenbereich (12) und einen Ausleitungsrillenbereich (14) einschließen, die miteinander nicht in Kommunikation stehen,
**dadurch gekennzeichnet, dass**:
der Gratbereich (20) einen unebenen Abschnitt (22) einschließt, der ausgelegt ist, um Gleiten der positiven Elektrode (104) oder der negativen Elektrode (105) in einer Richtung, in der die angrenzenden Rillenbereiche (10) parallel angeordnet sind, zu unterbinden,
der unebene Abschnitt (22) eine geneigte Oberfläche einschließt, die sich von einer Rillenbereichsseite zu der anderen Rillenbereichsseite der angrenzenden Rillenbereiche (10) neigt, und
die geneigte Oberfläche einen Höhenunterschied von 0,1 mm oder mehr und 0,5 mm oder weniger aufweist.

4. Bipolarplatte nach einem der Ansprüche 1 bis 3, wobei der Einleitungsrillenbereich (12) und der Ausleitungsrillenbereich (14) eines von Nachstehendem (A) bis (C) erfüllen:
(A) Der Einleitungsrillenbereich (12) und der Ausleitungsrillenbereich (14) schließen jeweils eine kammzahnförmige Region ein, um eine ineinandergreifende, gegenüberliegende Kammzahnform zu bilden, in der die Kammzähne so angeordnet sind, dass sie auf ineinandergreifende Weise zueinander zugewandt sind;
(B) Der Einleitungsrillenbereich (12) und der Ausleitungsrillenbereich (14) schließen jeweils eine kammzahnförmige Region ein, um eine nicht ineinandergreifende, gegenüberliegende Kammzahnform zu bilden, in der die Kammzähne nicht ineinandergreifend zueinander stehen;
(C) Mindestens einer des Einleitungsrillenbereichs (12) und des Ausleitungsrillenbereichs (14) wird durch eine Vielzahl von diskontinuierlichen Rillenbereichen gebildet.

5. Zellenrahmen, umfassend die Bipolarplatte (1) nach einem der Ansprüche 1 bis 4 und einen Rahmenkörper (122), der auf einem Außenumfang der Bipolarplatte (1) angeordnet ist.

6. Zellenstapel, der durch vielfaches Stapeln des Zellenrahmens nach Anspruch 5, einer positiven Elektrode (104), einer Membran (101) und einer negativen Elektrode (105) erhalten wird.

7. Redox-Durchflussbatterie, die den Zellenstapel nach Anspruch 6 umfasst.

## Revendications

1. Plaque bipolaire pour une batterie, la plaque bipolaire (1) présentant une surface sur laquelle une électrode positive (104) doit être disposée et une autre surface sur laquelle une électrode négative (105) doit être disposée,
dans laquelle au moins une des surfaces de la plaque bipolaire (1) est pourvue d'une pluralité de sections de rainure (10) à travers lesquelles un électrolyte passe et d'une section d'arête (20) située entre les sections de rainure (10) qui sont adjacentes les unes aux autres,
les sections de rainure (10) incluent une section de rainure d'introduction (12) et une section de rainure de décharge (14) qui ne sont pas en communication l'une avec l'autre,
**caractérisée en ce que** :
la section d'arête (20) inclut une portion inégale (22) configurée pour supprimer le glissement de l'électrode positive (104) ou de l'électrode négative (105) dans une direction dans laquelle les sections de rainure adjacentes (10) sont agencées en parallèle,
la portion inégale (22) inclut une surface rugueuse pourvue sur au moins une partie d'une surface de la section d'arête (20), et
la surface rugueuse présente une rugosité de surface de 0,1 pm ou plus et de 10 pm ou moins en termes de rugosité moyenne arithmétique Ra.

2. Plaque bipolaire pour une batterie, la plaque bipolaire (1) présentant une surface sur laquelle une électrode positive (104) doit être disposée et une autre surface sur laquelle une électrode négative (105) doit être disposée,
dans laquelle au moins une des surfaces de la plaque bipolaire (1) est pourvue d'une pluralité de sections de rainure (10) à travers lesquelles un électrolyte passe et d'une section d'arête (20) située entre les sections de rainure (10) qui sont adjacentes les unes aux autres,
les sections de rainure (10) incluent une section de rainure d'introduction (12) et une section de rainure de décharge (14) qui ne sont pas en communication l'une avec l'autre,
**caractérisée en ce que** :
la section d'arête (20) inclut une portion inégale (22) configurée pour supprimer le glissement de l'électrode positive (104) ou de l'électrode négative (105) dans une direction dans laquelle les sections de rainure adjacentes (10) sont agencées en parallèle,
la portion inégale (22) inclut une marche pourvue de manière à présenter une différence de hauteur dans la direction dans laquelle les sections de rainure adjacentes (10) sont agencées en parallèle, et
la marche présente une différence maximale de hauteur de 0,1 mm ou plus et de 0,5 mm ou moins.

3. Plaque bipolaire pour une batterie, la plaque bipolaire (1) présentant une surface sur laquelle une électrode positive (104) doit être disposée et une autre surface sur laquelle une électrode négative (105) doit être disposée,
dans laquelle au moins une des surfaces de la plaque bipolaire (1) est pourvue d'une pluralité de sections de rainure (10) à travers lesquelles un électrolyte passe et d'une section d'arête (20) située entre les sections de rainure (10) qui sont adjacentes les unes aux autres,
les sections de rainure (10) incluent une section de rainure d'introduction (12) et une section de rainure de décharge (14) qui ne sont pas en communication l'une avec l'autre,
**caractérisée en ce que** :
la section d'arête (20) inclut une portion inégale (22) configurée pour supprimer le glissement de l'électrode positive (104) ou de l'électrode négative (105) dans une direction dans laquelle les sections de rainure adjacentes (10) sont agencées en parallèle,
la portion inégale (22) inclut une surface inclinée qui s'incline depuis un côté de section de rainure vers l'autre côté de section de rainure des sections de rainure adjacentes (10), et
la surface inclinée présente une différence de hauteur de 0,1 mm ou plus et de 0,5 mm ou moins.

4. Plaque bipolaire selon l'une quelconque des revendications 1 à 3, dans laquelle la section de rainure d'introduction (12) et la section de rainure de décharge (14) satisfont à l'une quelconque des conditions (A) à (C) ci-dessous :
(A) la section de rainure d'introduction (12) et la section de rainure de décharge (14) incluent chacune une région en forme de dents de peigne pour former une forme de dents de peigne opposée et interdigitée dans laquelle les dents de peigne sont disposées de manière à se faire face les unes aux autres de manière interdigitée ;
(B) la section de rainure d'introduction (12) et la section de rainure de décharge (14) incluent chacune une région en forme de dents de peigne pour former une forme de dents de peigne opposée et non interdigitée dans laquelle les dents en peigne ne sont pas interdigitées les unes par rapport aux autres ; et
(C) au moins une parmi la section de rainure d'introduction (12) et la section de rainure de décharge (14) est formée par une pluralité de sections de rainure discontinues.

5. Cadre de cellule comprenant la plaque bipolaire (1) selon l'une quelconque des revendications 1 à 4 et
un corps de cadre (122) disposé sur une périphérie externe de la plaque bipolaire (1).

6. Pile de cellules obtenue en empilant le cadre de cellule selon la revendication 5, une électrode positive (104), une membrane (101) et une électrode négative (105) une pluralité de fois.

7. Batterie à débit redox comprenant la pile de cellules selon la revendication 6.
